# EUROPEAN PATENT SPECIFICATION

(11) **EP 2 823 401 B1**
(45) Date of publication and mention of the grant of the patent: **17.06.2020**
(21) Application number: 13757008.1
(22) Date of filing: 06.03.2013
(51) Int. Cl.: G06F 12/00, G06F 12/06, G06F 13/14, G06F 3/06

(54) **DEDUPLICATING HYBRID STORAGE AGGREGATE**
DEDUPLIZIERUNG HYBRIDER SPEICHERAGGREGATE
DÉDUPLICATION D'ENSEMBLE DE DISPOSITIFS DE STOCKAGE HYBRIDE

(30) Priority: 07.03.2012 US 201213413898
(43) Date of publication of application: 14.01.2015
(73) Proprietor: NetApp, Inc., Sunnyvale, CA 94089 (US)
(72) Inventor: SUNDARAM, Rajesh, Sunnyvale, CA 94089 (US); DOUCETTE, Douglas, P., Sunnyvale, California 94089 (US); DRONAMRAJU, Ravikanth, Sunnyvale, California 94089 (US)
(74) Representative: Budde Schou A/S
(86) International application number: PCT/US2013/029288
(87) International publication number: WO 2013/134347

(56) References cited:
- WO-A1-2008/070173
- KR-A- 20110 116 404
- US-A1- 2010 070 715
- US-A1- 2010 211 616
- US-A1- 2010 211 616
- US-A1- 2011 055 471
- US-A1- 2011 161 291
- US-A1- 2011 320 690
- US-A1- 2011 320 865
- George Crump: "What is the Best SSD Optimization Method?", , 10 November 2011 (2011-11-10), XP055214238, Retrieved from the Internet: URL:http://www.storage-switzerland.com/Art icles/Entries/2011/11/10_What_is_the_Best_ SSD_Optimization_Method.html [retrieved on 2015-09-17]
- Anonymous: "Intelligent Caching and NetApp Flash Cache - NetApp Community", , 22 July 2010 (2010-07-22), XP055214271, Retrieved from the Internet: URL:http://community.netapp.com/t5/Tech-On Tap-Articles/Intelligent-Caching-and-NetAp p-Flash-Cache/ta-p/85956 [retrieved on 2015-09-17]
- storageswiss: "Which SSD Efficency Technique is Best", , 30 November 2011 (2011-11-30), XP054976072, Retrieved from the Internet: URL:https://www.youtube.com/watch?feature= player_embedded&v=7tr-67cqFxE [retrieved on 2015-09-18]
- Stewart Vaughn: "VCE-101: Deduplication: Storage Capacity and Array", , 21 July 2009 (2009-07-21), pages 1-12, XP055525450, Retrieved from the Internet: URL:http://vaughnstewart.com/2009/07/21/vc e-101-deduplication-storage-capacity-and-a rray-cache/ [retrieved on 2018-11-20]

## Description

### TECHNICAL FIELD

Various embodiments of the present application generally relate to the field of managing data storage systems. More specifically, various embodiments of the present application relate to methods and systems for deduplicating a cached hybrid storage aggregate.

### BACKGROUND

The proliferation of computers and computing systems has resulted in a continually growing need for reliable and efficient storage of electronic data. A storage server is a specialized computer that provides storage services related to the organization and storage of data. The data is typically stored on writable persistent storage media, such as non-volatile memories and disks. The storage server may be configured to operate according to a client/server model of information delivery to enable many clients or applications to access the data served by the system. The storage server can employ a storage architecture that serves the data with both random and streaming access patterns at either a file level, as in network attached storage (NAS) environments, or at the block level, as in a storage area network (SAN).

The various types of non-volatile storage media used by a storage server can have different latencies. Access time (or latency) is the period of time required to retrieve data from the storage media. In many cases, data is stored on hard disk drives (HDDs) which have a relatively high latency. In HDDs, disk access time includes the disk spin-up time, the seek time, rotational delay, and data transfer time. In other cases, data is stored on solid-state drives (SSDs). SSDs generally have lower latencies than HDDs because SSDs do not have the mechanical delays inherent in the operation of the HDD. HDDs generally provide good performance when reading large blocks of data which is stored sequentially on the physical media. However, HDDs do not perform as well for random accesses because the mechanical components of the device must frequently move to different physical locations on the media.

SSDs typically use solid-state memory, such as non-volatile flash memory, to store data. With no moving parts, SSDs typically provide better performance for random and frequent memory accesses because of the relatively low latency. However, SSDs are generally more expensive than HDDs and sometimes have a shorter operational lifetime due to wear and other degradation. These additional upfront and replacement costs can become significant for data centers which have many storage servers using many thousands of storage devices.

Hybrid storage aggregates combine the benefits of HDDs and SSDs. A storage "aggregate" is a logical aggregation of physical storage; i.e., a logical container for a pool of storage, combining one or more physical mass storage devices or parts thereof into a single logical storage object, which contains or provides storage for one or more other logical data sets at a higher level of abstraction (e.g., volumes). In some hybrid storage aggregates, relatively expensive SSDs make up part of the hybrid storage aggregate and provide high performance, while relatively inexpensive HDDs make up the remainder of the storage array. In some cases other combinations of storage devices with various latencies may also be used in place of or in combination with the HDDs and SSDs. These other storage devices include non-volatile random access memory (NVRAM), tape drives, optical disks and micro-electro-mechanical (MEMs) storage devices. Because the low latency (i.e., SSD) storage space in the hybrid storage aggregate is limited, the benefit associated with the low latency storage is maximized by using it for storage of the most frequently accessed (i.e., "hot") data. The remaining data is stored in the higher latency devices. Because data and data usage change over time, determining which data is hot and should be stored in the lower latency devices is an ongoing process. Moving data between the high and low latency devices is a multi-step process that requires updating of pointers and other information that identifies the location of the data.

In some cases, the lower latency storage is used as a cache for the higher latency storage. In these configurations, copies of the most frequently accessed data are stored in the cache. When a data access is performed, the faster cache may first be checked to determine if the required data is located therein, and, if so, the data may be accessed from the cache. In this manner, the cache reduces overall data access times by reducing the number of times the higher latency devices must be accessed. In some cases, cache space is used for data which is being frequently written (i.e., a write cache). Alternatively, or additionally, cache space is used for data which is being frequently read (i.e., read cache). The policies for management and operation of read caches and write caches are often different.

In order to more efficiently use the available data storage space in a storage system and minimize costs, various techniques are used to compress data and/or minimize the number of instances of duplicate data. Data deduplication is one method of removing duplicate instances of data from the storage system. Data deduplication is a technique for eliminating coarse-grained redundant data. In a deduplication process, blocks of data are compared to other blocks of data stored in the system. When two or more identical blocks of data are identified, the redundant block(s) are deleted or otherwise released from the system. The metadata associated with the deleted block(s) is modified to point to the instance of the data block which was not deleted. In this way, two or more applications or files can utilize the same block of data for different purposes. The deduplication process saves storage space by coalescing the duplicate data blocks and coordinating the sharing of a single instance of the data block. However, performing deduplication in a hybrid storage aggregate without taking the caching statuses of the data blocks into account may inhibit or counteract the performance benefits of using caches. United States patent application US 2011/055471 discloses an apparatus, system, and method for improved deduplication. The apparatus includes an input module, a hash module, and a transmission module that are implemented in a nonvolatile storage device. The input module receives hash requests from requesting entities that may be internal or external to the nonvolatile storage device; the hash requests include a data unit identifier that identifies the data unit for which the hash is requested. The hash module generates a hash for the data unit using a hash function. The hash is generated using the computing resources of the nonvolatile storage device. The transmission module sends the hash to a receiving entity when the input module receives the hash request. A deduplication agent uses the hash to determine whether or not the data unit is a duplicate of a data unit already stored in the storage system that includes the nonvolatile storage device.

### SUMMARY

Methods and apparatuses for performing deduplication in a hybrid storage aggregate are introduced here. These techniques involve deduplicating hybrid storage aggregates in manners which take the caching statuses of the blocks to be deduplicated into account. Data blocks may be deduplicated differently depending on whether they are read cache blocks, read cached blocks, write cache blocks, or blocks which do not have any caching status. Taking these statuses into account enables the system to get the space optimizing benefits of deduplication. If deduplication is implemented without taking these statuses into account, performance benefits associated with the caching may be counteracted.

In one example, such a method includes operating a hybrid storage aggregate that includes a plurality of tiers of different types of physical storage media. The method includes identifying a first storage block and a second storage block of the hybrid storage aggregate that contain identical data and identifying caching statuses of the first storage block and the second storage block. The method also includes deduplicating the first storage block and the second storage block based on the caching statuses of the first storage block and the second storage block. The implementation of the deduplication process may vary for each pair of blocks depending on whether the blocks are read cache blocks, read cached blocks, or write cache blocks. As used herein, a "read cache block" generally refers to a data block in a lower latency tier of the storage system which is serving as a higher performance copy of the "read cached block" which is in a higher latency tier of the storage system. A "write cache" block generally refers to a data block which is located in the lower latency tier for purposes of write performance.

In another example, a storage server system comprises a processor, a hybrid storage aggregate, and a memory. The hybrid storage aggregate includes a first tier of storage and a second tier of storage. The first tier of storage has a lower latency than the second tier of storage. The memory is coupled with the processor and includes a storage manager. The storage manager directs the processor to identify a first storage block and a second storage block in the hybrid storage aggregate that contain duplicate data. The storage manager then identifies caching relationships associated with the first storage block and the second storage block and deduplicates the first and the second storage blocks based on the caching relationships.

If deduplication is performed without taking the caching relationships into account, the performance benefit associated with the caching may be diminished or eliminated. For example, one block of hot data may be cached in a low latency storage tier for performance reasons. Another data block, which is a duplicate of the hot data block, may be stored in the high latency tier. If the caching status is not taken into account, the deduplication process may result in removal of the hot data block from the low latency tier and modification of the metadata associated the hot data block such that accesses to the data block are directed to the duplicate copy in the high latency tier. This outcome reduces or removes the performance benefit of the hybrid storage aggregate. Therefore, it is beneficial to perform the deduplication in a manner which preserves the hybrid storage aggregate performance benefit. In some cases, the deduplication process may vary further depending on whether the block(s) are being used as read cache or write cache blocks.

Embodiments introduced here also include other methods, systems with various components, and non-transitory machine-readable storage media storing instructions which, when executed by one or more processors, direct the one or more processors to perform the methods, variations of the methods, or other operations described herein. While multiple embodiments are disclosed, still other embodiments will become apparent to those skilled in the art from the following detailed description, which shows and describes illustrative embodiments of the invention. As will be realized, the invention is capable of modifications in various aspects, all without departing from the scope of the present invention. Accordingly, the drawings and detailed description are to be regarded as illustrative in nature and not restrictive.

### BRIEF DESCRIPTION OF THE DRAWINGS

Embodiments of the present invention will be described and explained through the use of the accompanying drawings in which:
FIG. 1 illustrates an operating environment in which some embodiments of the present invention may be utilized;
FIG. 2 illustrates a storage system in which some embodiments of the present invention may be utilized;
FIG. 3 illustrates an example buffer tree of a file according to an illustrative embodiment;
FIG. 4 illustrates an example of a method of deduplicating a hybrid storage aggregate;
FIG. 5A illustrates a block diagram of a file system prior to performing a deduplication process;
FIG. 5B illustrates a block diagram of the file system of FIG. 4A after performing a deduplication process;
FIG. 6A illustrates a block diagram of a file system prior to performing a deduplication process in a hybrid storage aggregate according to one embodiment of the invention;
FIG. 6B illustrates a block diagram of the file system of FIG. 6A after performing a deduplication process according to one embodiment of the invention;
FIG. 6C illustrates a block diagram of the file system of FIG. 6A after performing a deduplication process according to another embodiment of the invention;
FIG. 7A illustrates a block diagram of a file system prior to performing a deduplication process in a hybrid storage aggregate according to one embodiment of the invention;
FIG. 7B illustrates a block diagram of the file system of FIG. 7A after performing a deduplication process in a hybrid storage aggregate according to one embodiment of the invention; and
FIG. 8 illustrates another example of a method of deduplicating a hybrid storage aggregate.

The drawings have not necessarily been drawn to scale. For example, the dimensions of some of the elements in the figures may be expanded or reduced to help improve the understanding of the embodiments of the present invention. Similarly, some components and/or operations may be separated into different blocks or combined into a single block for the purposes of discussion of some of the embodiments of the present invention. Moreover, while the invention is amenable to various modifications and alternative forms, specific embodiments are shown by way of example in the drawings and are described in detail below. The intention, however, is not to limit the invention to the particular embodiments described. On the contrary, the invention is intended to cover all modifications, equivalents, and alternatives falling within the scope of the invention as defined by the appended claims.

### DETAILED DESCRIPTION

Some data storage systems include persistent storage space which is made up of different types of storage devices with different latencies. The low latency devices offer better performance but typically have cost and/or other drawbacks. Implementing a portion of the system with low latency devices provides some performance improvement without incurring the cost or other limitations associated with implementing the entire storage system with these types of devices. The system performance improvement may be optimized by selectively caching the most frequently accessed data (i.e., the hot data) in the lower latency devices. This maximizes the number of reads and writes to the system which will occur in the faster, lower latency devices. The storage space available in the lower latency devices may be used to implement a read cache, a write cache, or both.

In order to make the most efficient use of the available storage space, various types of data compression and consolidation are often implemented. Data deduplication is one method of removing duplicate instances of data from the storage system in order to free storage space for additional, non-duplicate data. In the deduplication process, blocks of data are compared to other blocks of data stored in the system. When identical blocks of data are identified, the redundant block is replaced with a pointer or reference that points to the remaining stored chunk. Two or more applications or files share the same stored block of data. The deduplication process saves storage space by coalescing these duplicate data blocks and coordinating the sharing of a single remaining instance of the block. However, performing deduplication on data blocks without taking into account whether those blocks are cache or cached blocks may have detrimental effects on the performance gains associated with the hybrid storage aggregate. As used herein, a "block" of data is a contiguous set of data of a known length starting at a particular address value. In certain embodiments, each level 0 block is 4 kBytes in length. However, the blocks could be other sizes.

The techniques introduced here resolve these and other problems by deduplicating the hybrid storage aggregate based on the caching statuses of the blocks being deduplicated. Deduplication often involves deleting, removing, or otherwise releasing one of the duplicate blocks. In some cases, one of the duplicate blocks is read cached in the lower latency storage and the performance benefits are maintained by deleting the duplicate block which is not read cached. In other cases, one of the duplicate blocks is write cached and the deduplication process improves performance of the system, without deleting one of the duplicate blocks, by extending the performance benefit of the write cached blocked to the identified duplicate instance of the block.

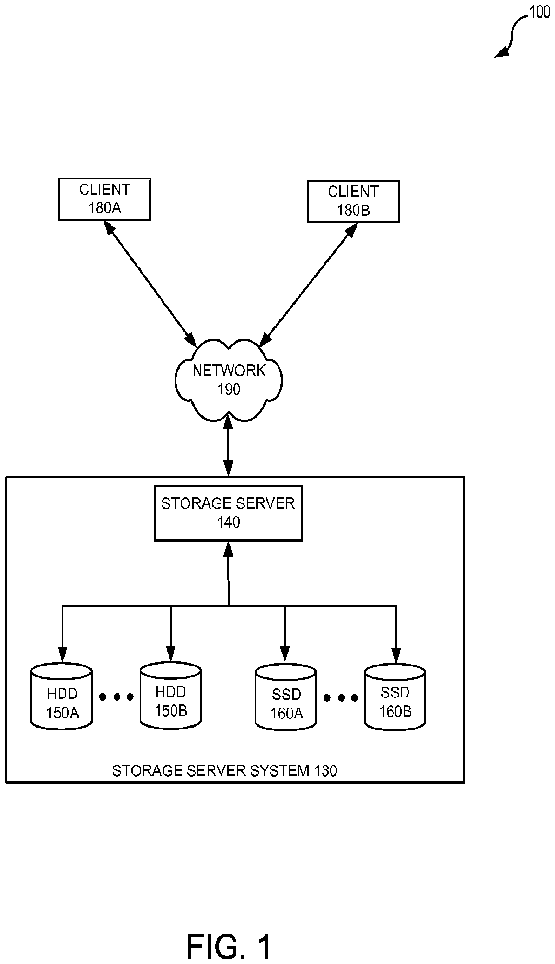

FIG. 1 illustrates an operating environment 100 in which some embodiments of the techniques introduced here may be utilized. Operating environment 100 includes storage server system 130, clients 180A and 180B, and network 190.

Storage server system 130 includes storage server 140, HDD 150A, HDD 150B, SSD 160A, and SSD 160B. Storage server system 130 may also include other devices or storage components of different types which are used to manage, contain, or provide access to data or data storage resources. Storage server 140 is a computing device that includes a storage operating system that implements one or more file systems. Storage server 140 may be a server-class computer that provides storage services relating to the organization of information on writable, persistent storage media such as HDD 150A, HDD 150B, SSD 160A, and SSD 160B. HDD 150A and HDD 150B are hard disk drives, while SSD 160A and SSD 160B are solid state drives (SSD).

A typical storage server system will include many more HDDs or SSDs than are illustrated in FIG. 1. It should be understood that storage server system 130 may be also implemented using other types of persistent storage devices in place of or in combination with the HDDs and SSDs. These other types of persistent storage devices may include, for example, flash memory, NVRAM, MEMs storage devices, or a combination thereof. Storage server 140 may also include other devices, including a storage controller, for accessing and managing the persistent storage devices. Storage server system 130 is illustrated as a monolithic system, but could include systems or devices which are distributed among various geographic locations. Storage server system 130 may also include additional storage servers which operate using storage operating systems which are the same or different from storage server 140.

Storage server 140 performs deduplication on data stored in HDD 150A, HDD 150B, SSD 160A, and SSD 160B according to embodiments of the invention described herein. The teachings of this description can be adapted to a variety of storage server architectures including, but not limited to, a network-attached storage (NAS), storage area network (SAN), or a disk assembly directly-attached to a client or host computer. The term "storage server" should therefore be taken broadly to include such arrangements.

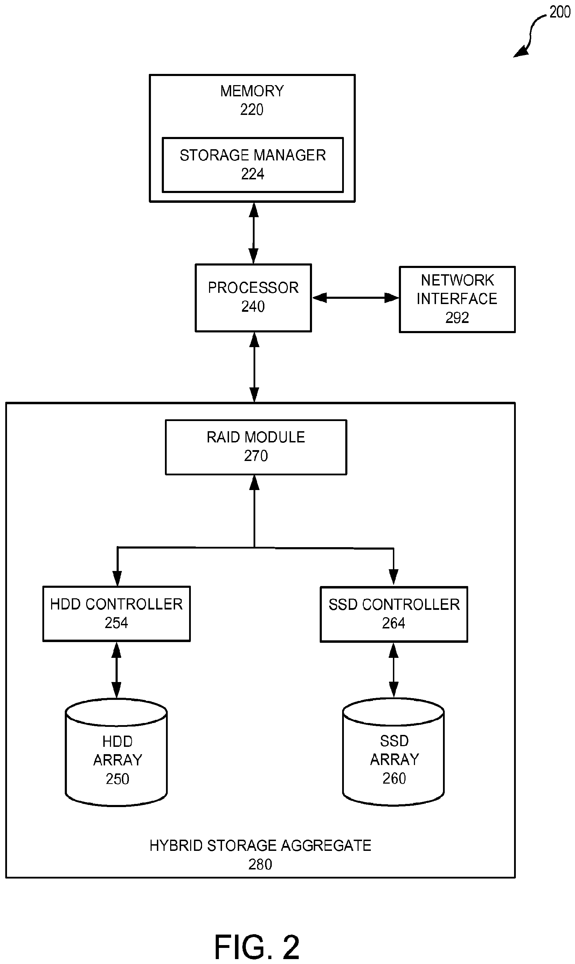

FIG. 2 illustrates storage system 200 in which some embodiments of the techniques introduced here may also be utilized. Storage system 200 includes memory 220, processor 240, network interface 292, and hybrid storage aggregate 280. Hybrid storage aggregate 280 includes HDD array 250, HDD controller 254, SSD array 260, SSD controller 264, and RAID module 270. HDD array 250 and SSD array 260 are heterogeneous tiers of persistent storage media. Because they have different types of storage media and therefore different performance characteristics, HDD array 250 and SSD array 260 are referred to as different "tiers" of storage. HDD array 250 includes relatively inexpensive, higher latency magnetic storage media devices constructed using disks and read/write heads which are mechanically moved to different locations on the disks. SSD array 260 includes relatively expensive, lower latency electronic storage media 340 constructed using an array of non-volatile, flash memory devices. Hybrid storage aggregate 280 may also include other types of storage media of differing latencies. The embodiments described herein are not limited to the HDD/SSD configuration and are not limited to implementations which have only two tiers of persistent storage media.

Hybrid storage aggregate 280 is a logical aggregation of the storage in HDD array 250 and SSD array 260. In this example, hybrid storage aggregate 280 is a collection of RAID groups which may include one or more volumes. RAID module 270 organizes the HDDs and SSDs within a particular volume as one or more parity groups (e.g., RAID groups) and manages placement of data on the HDDs and SSDs. RAID module 270 further configures RAID groups according to one or more RAID implementations to provide protection in the event of failure of one or more of the HDDs or SSDs. The RAID implementation enhances the reliability and integrity of data storage through the writing of data "stripes" across a given number of HDDs and/or SSDs in a RAID group including redundant information (e.g., parity). HDD controller 254 and SSD controller 264 perform low level management of the data which is distributed across multiple physical devices in their respective arrays. RAID module 270 uses HDD controller 254 and SSD controller 264 to respond to requests for access to data in HDD array 250 and SSD array 260.

Memory 220 includes storage locations that are addressable by processor 240 for storing software programs and data structures to carry out the techniques described herein. Processor 240 includes circuitry configured to execute the software programs and manipulate the data structures. Storage manager 224 is one example of this type of software program. Storage manager 224 directs processor 240 to, among other things, implement one or more file systems. Processor 240 is also interconnected to network interface 292. Network interface 292 enables other devices or systems to access data in hybrid storage aggregate 280.

In one embodiment, storage manager 224 implements data placement or data layout algorithms that improve read and write performance in hybrid storage aggregate 280. Storage manager 224 may be configured to relocate data between HDD array 250 and SSD array 260 based on access characteristics of the data. For example, storage manager 224 may relocate data from HDD array 250 to SSD array 260 when the data is determined to be hot, meaning that the data is frequently accessed, randomly accessed, or both. This is beneficial because SSD array 260 has lower latency and having the most frequently and/or randomly accessed data in the limited amount of available SSD space will provide the largest overall performance benefit to storage system 200.

In the context of this explanation, the term "randomly" accessed, when referring to a block of data, pertains to whether the block of data is accessed in conjunction with accesses of other blocks of data stored in the same physical vicinity as that block on the storage media. Specifically, a randomly accessed block is a block that is accessed not in conjunction with accesses of other blocks of data stored in the same physical vicinity as that block on the storage media. While the randomness of accesses typically has little or no affect on the performance of solid state storage media, it can have significant impacts on the performance of disk based storage media due to the necessary movement of the mechanical drive components to different physical locations of the disk. A significant performance benefit may be achieved by relocating a data block that is randomly accessed to a lower latency tier, even though the block may not be accessed frequently enough to otherwise qualify it as hot data. Consequently, the frequency of access and nature of the access (i.e., whether the accesses are random) may be jointly considered in determining which data should be located to a lower latency tier.

In another example, storage manager 224 may initially store data in the SSDs of SSD array 260. Subsequently, the data may become "cold" in that it is either infrequently accessed or frequently accessed in a sequential manner. As a result, it is preferable to move this cold data from SSD array 260 to HDD array 250 in order to make additional room in SSD array 260 for hot data. Storage manager 224 cooperates with RAID module 270 to determine initial storage locations, monitor data usage, and relocate data between the arrays as appropriate. The criteria for the threshold between hot and cold data may vary depending on the amount of space available in the low latency tier.

In at least one embodiment, data is stored by hybrid storage aggregate 280 in the form of logical containers such as volumes, directories, and files. A "volume" is a set of stored data associated with a collection of mass storage devices, such as disks, which obtains its storage from (i.e., is contained within) an aggregate, and which is managed as an independent administrative unit, such as a complete file system. Each volume can contain data in the form of one or more files, directories, subdirectories, logical units (LUNs), or other types of logical containers.

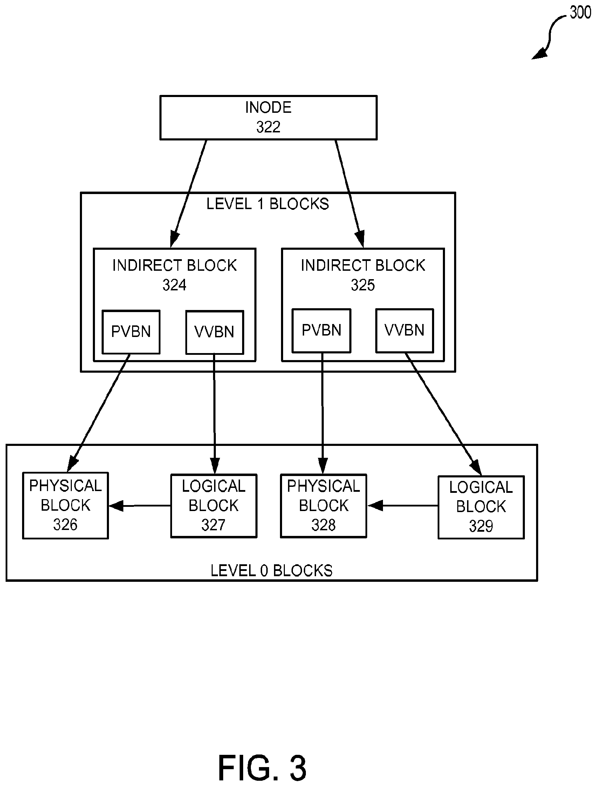

Files in hybrid storage aggregate 280 can be represented in the form of a buffer tree, such as buffer tree 300 in FIG. 3. Buffer tree 300 is a hierarchical data structure that contains metadata about a file, including pointers for use in locating the blocks of data in the file. The blocks of data that make up a file are often not stored in sequential physical locations and may be spread across many different physical locations or regions of the storage arrays. Over time, some blocks of data may be moved to other locations while other blocks of data of the file are not moved. Consequently, the buffer tree is a mechanism for locating all of the blocks of a file.

A buffer tree includes one or more levels of indirect blocks that contain one or more pointers to lower-level indirect blocks and/or to the direct blocks. Determining the actual physical location of a block may require working through several levels of indirect blocks. In the example of buffer tree 300, the blocks designated as "Level 1" blocks are indirect blocks. These blocks point to the "Level 0" blocks which are the direct blocks of the file. Additional levels of indirect blocks are possible. For example, buffer tree 300 may include level 2 blocks which point to level 1 blocks. In some cases, some level 2 blocks of a group may point to level 1 blocks, while other level 2 blocks of the group point to level 0 blocks.

The root of buffer tree 300 is inode 322. An inode is a metadata container used to store metadata about the file, such as ownership of the file, access permissions for the file, file size, file type, and pointers to the highest-level of indirect blocks for the file. The inode is typically stored in a separate inode file. The inode is the starting point for finding the location of all of the associated data blocks. In the example illustrated, inode 322 references level 1 indirect blocks 324 and 325. Each of these indirect blocks stores a least one physical volume block number (PVBN) and a corresponding virtual volume block number (VVBN). For purposes of illustration, only one PVBN-VVBN pair is shown in each of indirect blocks 324 and 325. However, many PVBN-WBN pairs may be included in each indirect block. Each PVBN references a physical block in hybrid storage aggregate 280 and the corresponding VVBN references the associated logical block number in the volume. In the illustrated embodiment, the PVBN in indirect block 324 references physical block 326 and the PVBN in indirect block 325 references physical block 328. Likewise, the VVBN in indirect block 324 references logical block 327 and the VVBN in indirect block 325 references logical block 329. Logical blocks 327 and 329 point to physical blocks 326 and 328, respectively.

A file block number (FBN) is the logical position of a block of data within a particular file. Each FBN maps to a VVBN-PVBN pair within a volume. Storage manager 224 implements a FBN to PVBN mapping. Storage manager 224 further cooperates with RAID module 270 to control storage operations of HDD array 250 and SSD array 260. Storage manager 224 translates each FBN into a PVBN location within hybrid storage aggregate 280. A block can then be retrieved from a storage device using topology information provided by RAID module 270.

When a block of data in HDD array 250 is moved to another location within HDD array 250, the indirect block associated with the block is updated to reflect the new location. However, inode 322 and the other indirect blocks may not need to be changed. Similarly, a block of data that is moved between HDD array 250 and SSD array 260 by copying the block to the new physical location and updating the associated indirect block with the new location. The various blocks that make up a file may be scattered among many non-contiguous physical locations and may even be split across different types of storage media such as those which make up HDD array 250 and SSD array 260. Throughout the remainder of this description, the changes to a buffer tree associated with movement of a data block will be described as changes to the metadata of the block to point to a new location. Changes to the metadata of a block may include changes to any one or any combination of the elements of the associated buffer tree.

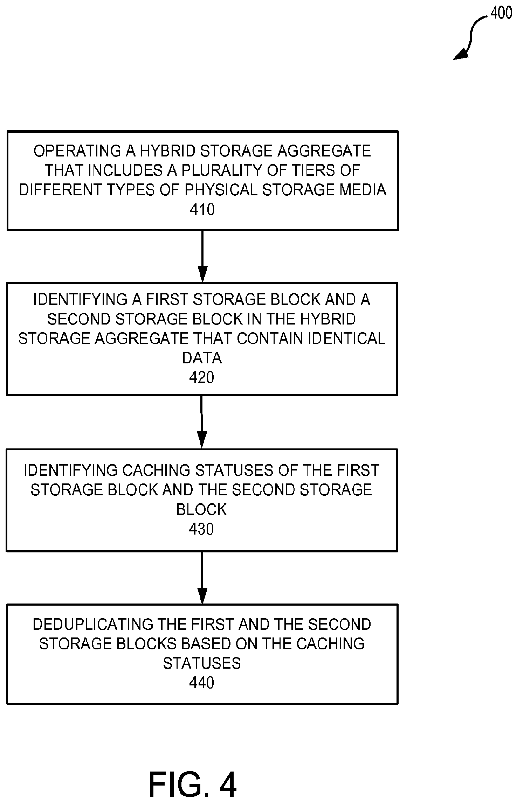

FIG. 4 illustrates method 400 of deduplicating a hybrid storage aggregate. Method 400 includes operating a hybrid storage aggregate that includes a plurality of tiers of different types of physical storage media (step 410). The method includes storage manager 224, running on processor 240,identifying a first storage block and a second storage block of the hybrid storage aggregate that contain identical data (step 420). Each of the first and the second storage block may be located in any of the storage tiers of a storage system. In addition, each of the first and the second storage block may also be a read cache block, a read cached block, a write cache block, or may have not caching status. The method further includes storage manager 224 identifying caching statuses of the first storage block and the second storage block (step 430) and deduplicating the first storage block and the second storage block based on the caching statuses of the first storage block and the second storage block (step 440). As described in the examples which follow, a particular deduplication implementation may be chosen based on whether the blocks containing duplicate data are write cache blocks, read cache blocks, or read cached blocks.

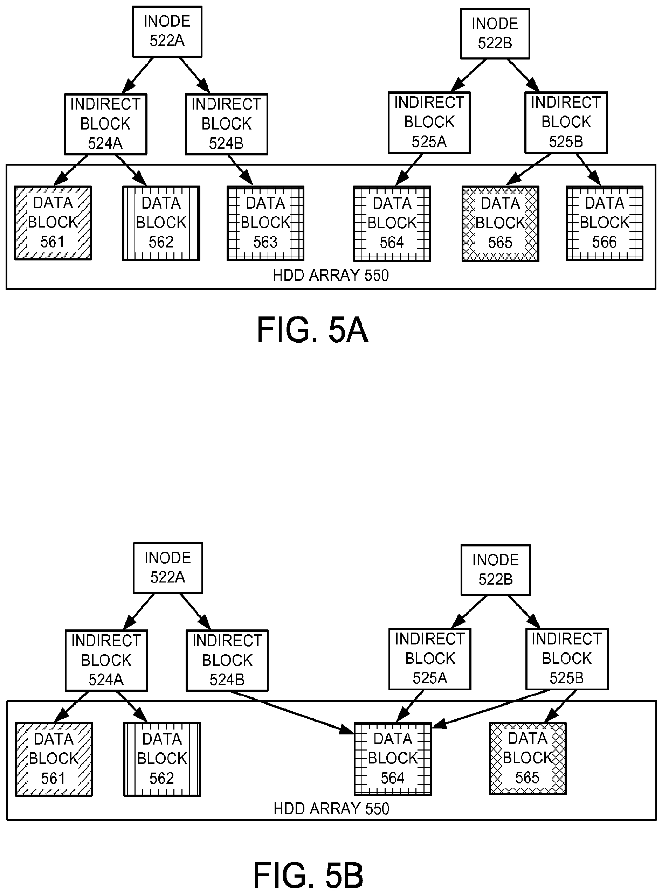

FIG. 5A illustrates a block diagram of a file system prior to performing a deduplication process. The file system contains two buffer tree structures associated with two files. A file system will typically include many more files and buffer tree structures. Only two are shown for purposes of illustration. Inode 522A and 522B, among other functions, point to the indirect blocks associated with the respective files. The indirect blocks point to the physical blocks of data in HDD array 550 which make up the respective files. For example, inode 522A is made up of the blocks labeled data block 561, data block 562, and data block 563. A typical file will be made up of many more blocks, but the number of blocks is limited for purposes of illustration. The fill patterns of the data blocks illustrated in FIG. 5A are indicative of the content of the data blocks. As indicated by the fill patterns, the blocks labeled data block 563, data block 564, and data block 566 contain identical data. Because they contain duplicate data, deduplication can make additional storage space available in the storage system.

FIG. 5B illustrates a block diagram of the file system of FIG. 5A after deduplication has been performed. The result of the process is that data block 563 and data block 566 are no longer used. Indirect blocks 524B, 525A, and 525B each now point to one instance of the data block, data block 564. Data block 564 is now used by both inode 522A and 522B. Data block 563 and 566 are no longer used and the associated storage space is now available for other purposes. It should be understood that bits associated with data block 563 and 566 which are physically stored on the media may not actually be removed or deleted as part of this process. In some systems, references to the data locations are removed or changed thereby logically releasing those storage locations from use within the system. Even though released, the bits which made up those blocks may be present in the physical storage locations until overwritten at some later point in time when that portion of the physical storage space is used to store other data. The term "deleted" is used herein to indicate that a block of data is no longer referenced or used and does not necessarily indicate that the bits associated with the block are deleted from or overwritten in the physical storage media at the time.

In some cases, the block(s) which are deleted from the buffer tree through the deduplication process are referred to as recipient blocks. In the examples of FIGS. 5A and 5B, data block 563 is a recipient block. In some cases, the data block which remains and is pointed to by the metadata associated is referred to as the donor block. In the examples of FIGS. 5A and 5B, data block 564 is the donor block.

In one example, deduplication is performed by generating a unique fingerprint for each data block when it is stored. This can be accomplished by applying the data block to a hash function, such as SHA-256 or SHA-512. Two or more identical data blocks will always have the same fingerprint. By comparing the fingerprints during the deduplication process, duplicate data blocks can be identified and coalesced as illustrated in FIGS. 5A and 5B. Depending on the fingerprint process used, two matching fingerprints may, alone, be sufficient to indicate that the associated blocks are identical. In other cases, matching fingerprints may not be conclusive and a further comparison of the blocks may be required. Because the fingerprint of a block is much smaller than the data block itself, fingerprints for a large number of data blocks can be stored without consuming a significant portion of the storage capacity in the system. The fingerprint generation process may be performed as data blocks are received or may be performed through post-processing after the blocks have already been stored. Similarly, the deduplication process may performed at the time of initial receipt and storage of a data block or may be performed after the block has already been stored, as illustrated in FIG. 5B.

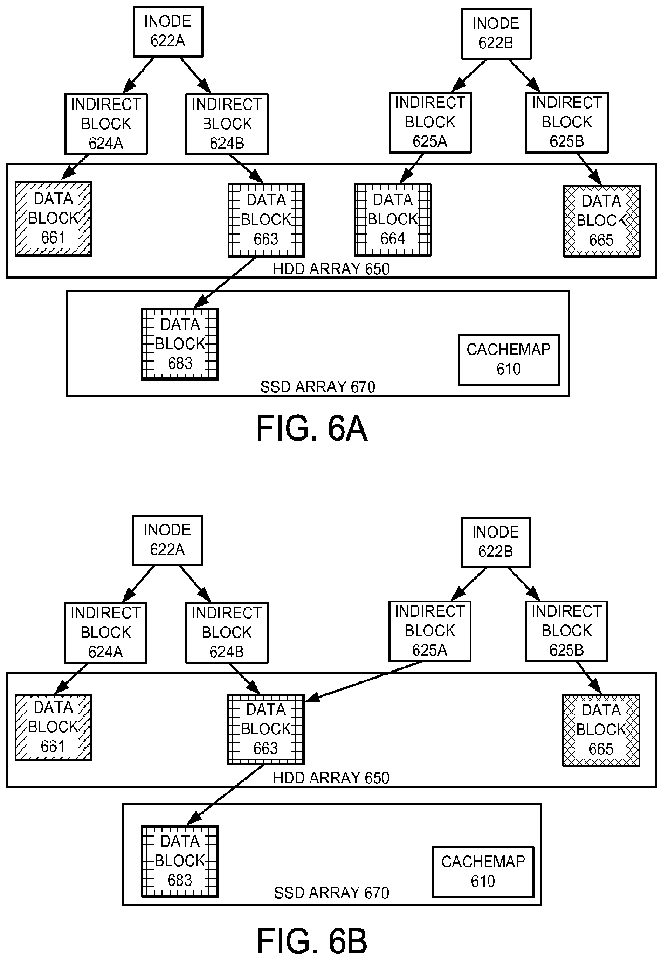

FIG. 6A illustrates a block diagram of a file system prior to performing a deduplication process in a hybrid storage aggregate according to one embodiment of the invention. HDD array 650 of FIG. 6A is an example of HDD array 250 of FIG. 2. SSD array 670 of FIG. 6A is an example of SSD array 260 of FIG. 2. SSD array 670 is used to selectively store data blocks in a manner which will improve performance of the hybrid storage aggregate. In most cases, it would be prohibitively expensive to replace all of HDD array 650 with SSD devices like those which make up SSD array 670. SSD array 670 includes cachemap 610. Cachemap 610 is an area of SSD array 670 which is used to store information regarding which data blocks are stored in SSD array 670 including information about the location of those data blocks within SSD array 670.

It should be understood that storage arrays including other types of storage devices may be substituted for one or both of HDD array 650 and SSD array 670. Furthermore, additional storage arrays may be added to provide a system which contains three or more tiers of storage each having latencies which differ from the other tiers. As in FIGS. 5A and 5B, the fill patterns in the data blocks of FIGS. 6A and 6B are indicative of the content of the data blocks.

A read cache block is a copy of a data block created in a lower latency storage tier for a data block which is currently being read frequently (i.e., the data block is hot). Because the block is being read frequently, incremental performance improvement can be achieved by placing a copy of the block in a lower latency storage tier and directing requests for the block to the lower latency storage tier. In FIG. 6A, data block 663 was determined to be hot at a prior point in time and a copy of data block 663 was created in SSD array 670 (i.e., data block 683). In conjunction with making this copy, an entry was made in cachemap 610 to indicate that the copy of data block 663 (i.e., data block 683) is available in SSD array 670 and indicates the location. When blocks of data are read from the storage system, cachemap 610 is first checked to see if the requested data block is available in SSD array 670.

For example, when a request is received to read data block 663, cachemap 610 is first checked to see if a copy of data block 663 is available in SSD array 670. Cachemap 610 includes information indicating that data block 683 is available as a copy of data block 663 and provides its location, along with information about all of the other blocks which are stored in SSD array 670. In this case, because a copy of data block 663 is available, the read request is satisfied by reading data block 683. In other words, HDD array 650 is not accessed in the reading of data associated with data block 663. Data block 683 can be read more quickly than data block 663 due to the characteristics of SSD array 670. When data block 663 is no longer hot, the references to data block 663 and data block 683 are removed from cachemap 610. The physical storage space occupied by data block 683 can then be used for other hot data blocks or for other purposes.

FIG. 6B illustrates a block diagram of the file system of FIG. 6A after performing a deduplication process according to one embodiment of the invention. As described previously, deduplication deletes or removes duplicate instances of the same data blocks from the system in order to free storage space for other uses. In FIGS. 5A and 5B, no selection criteria were applied to determine which of the three duplicate blocks were deleted or released and which was retained.

In contrast, the deduplication process illustrated in FIGS. 6A and 6B is performed based on the caching status of the blocks which contain duplicate data. Data blocks 663, 664, and 683 contain identical data. A choice must be made as to which blocks to delete or release as part of the deduplication process. Because data block 683 already exists as a read cache for data block 663, there is opportunity to further improve system performance by making leveraged use of data block 683. Therefore, read cache data block 683 is not deleted or released as part of the deduplication process due to its caching status.

In addition, deleting or releasing data block 663 would disrupt the read cache arrangement which already exists because information stored in cachemap 610 already links data block 663 with data block 683. Consequently, it is most efficient to release or delete data block 664, rather than data blocks 663 or 683, in order to accomplish the deduplication. The metadata in indirect block 625A associated with data block 664 is updated to point to data block 663.

By selectively performing the deduplication based on the caching statuses of the data blocks, the caching benefit associated with data block 663 which was already in place has not only been preserved, but a duplicate benefit has been realized. Storage space is freed in HDD array 650 and the performance benefit of data block 683 is realized through reads associated with both inode 622A and inode 622B.

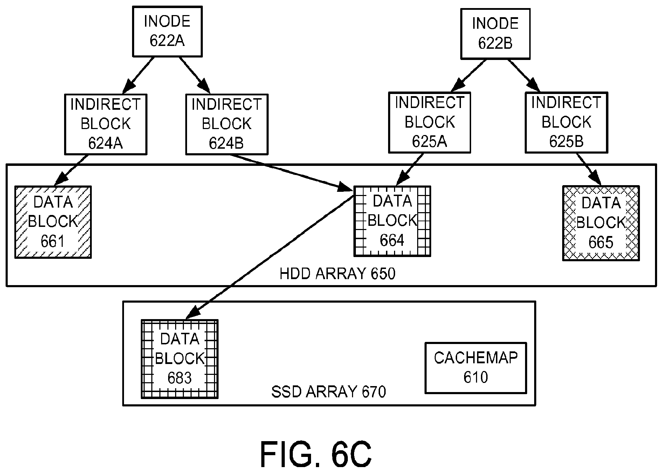

FIG. 6C illustrates a block diagram of the file system of FIG. 6A after performing an alternate deduplication process. In FIG. 6C, data block 663 has been freed, released, or deleted as part of the data duplication process. The metadata associated with data block 664 is modified to make it a read cached block which is associated with read cache data block 683. The read cache relationship is effectively "transferred" from data block 663 to data block 664 as part of the deduplication process. The metadata previously associated with data block 663 is modified to point to data block 664. As with FIG. 6B, both inode 622A and 622B now receive the read cache benefit of data block 683 in SSD array 670. While the read cached status of data block 663 is not given retention priority over previously uncached data block 664 as in FIG. 6B, the deduplication process still takes into account the cache status of data block 683 as a read cache block.

In FIG. 6C, data block 663 is freed, deleted, or released, rather than data block 664 as in FIG. 6B. Indirect block 624B is updated to point to data block 664. Data block 683 is no longer a read cache block for data block 683 and becomes a read cache block for data block 664. As in FIG. 6B, cachemap 610 of FIG. 6C contains information used to direct read requests associated with data block 663 and data block 664 to data block 683 in SSD array 670. Read requests are processed using cachemap 610 to determine if the requested data block is in SSD array 670. If not, the read request is satisfied using data in HDD array 650.

While the deduplication process of FIG. 6C requires at least one more step than the process illustrated in FIG. 6B, the process of FIG. 6C may nonetheless be preferable in some circumstances. For example, it may be preferable to retain data block 664 rather than data block 663 because it has a preferential physical location relative to the physical location of data block 663. The location may be preferential because it is sequentially located with other data blocks which are often read at the same time. In another example, it may be preferential to deduplicate data block 663 rather than data block 664 because data block 663 is located in a non-preferred location or in a location the system is attempting to clear. In another example, data block 663 may be deduplicated, even though it is already read cached, if it is becoming cold.

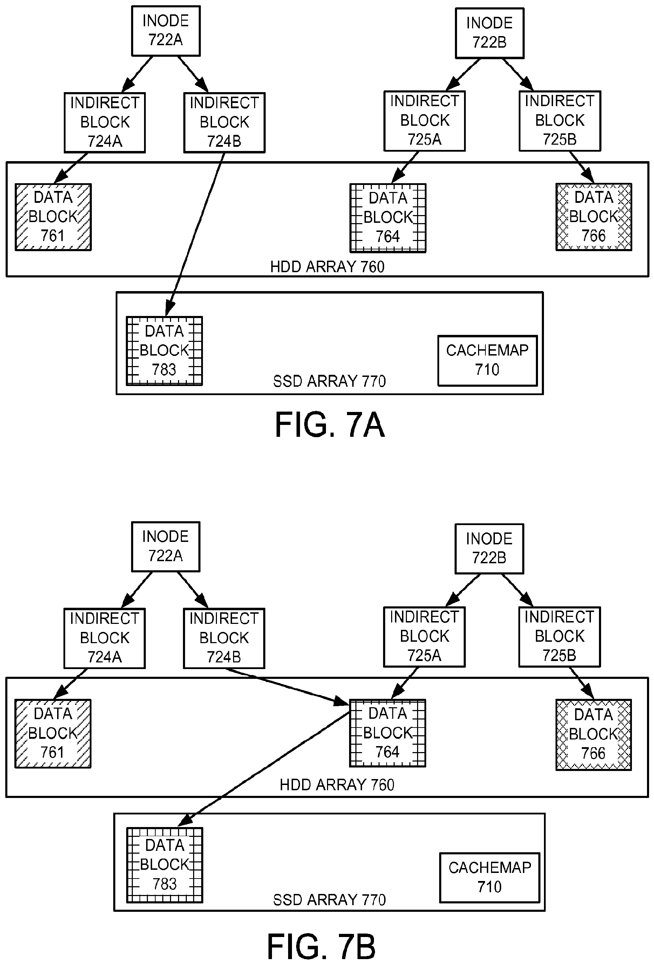

FIG. 7A illustrates a block diagram of a file system prior to performing a deduplication process in a hybrid storage aggregate according to another embodiment of the invention. In FIG. 7A, data block 783 is a write cache block. Data block 783 was previously moved from HDD array 760 to SSD array 770 because it had a high write frequency relative to other blocks (i.e., it was hot). Each of the writes to data block 783 can be completed more quickly because it is located in lower latency SSD array 770. In this example of write caching, a copy of cached data is not kept in HDD array 760. In other words, there is no counterpart to data block 783 in HDD array 760 as there is in the read cache examples of FIGS. 6A, 6B, and 6C. This configuration is preferred for write caching because a counterpart data block in HDD array 760 would have to be updated each time data block 783 was written. This would eliminate or significantly diminish the performance benefit of having data block 783 in SSD array 770. As in previous examples, cachemap 710 contains information indicating which data blocks are available in SSD array 770 and their location.

In the example of FIG. 7A, data block 783 and data block 764 contain identical data. As in previous examples, the caching statuses of data block 764 and 783 are taken into account when determining how to deduplicate the file system of FIG. 7A.

For example, if data block 783 continues to be hot or is expected to continue to be hot, there is potentially little benefit in deduplicating it with data block 764. This is true because there is a high likelihood that the data will change the next time it is written. In other words, data block 783 and data block 764 may be the same at the moment and data block 764 could be deduplicated to data block 783 but data block 783 will likely change in a relatively short period of time. Once a change to the data block has occurred in conjunction with either inode 722A or inode 722B, the deduplication process would have to be reversed because the data blocks needed by the two inodes would no longer be the same. While this is true in any deduplication situation, the probability of it occurring is much higher in write cache situations because the block is already known to be one which is being frequently written. The overhead of performing the deduplication process on data blocks 764 and 783 may provide little or no benefit. In other words, it may be most beneficial to avoid deduplicating a write cache block as part of a deduplication process even though it is a duplicate of another data block in the file system.

FIG. 7B illustrates a block diagram of the file system of FIG. 7A after deduplication has been performed on the file system of FIG. 7A. Although data block 783 is a write cache block, it may be beneficial, in contrast to the example described above, to perform the deduplication process on the block if the block has become or is becoming cold (i.e., the block is no longer being written frequently). In this case, deduplication involves converting data block 783 from a write cache block to a read cache block. The metadata of data block 764 is modified to point to data block 783 thereby improving read performance. Indirect block 724B is also modified to point to data block 764. In this case, deduplication did not change the amount of storage used in either HDD array 760 or SSD array 770, but the metadata changes provide the read performance benefit of data block 783 to both inode 722A and inode 722B.

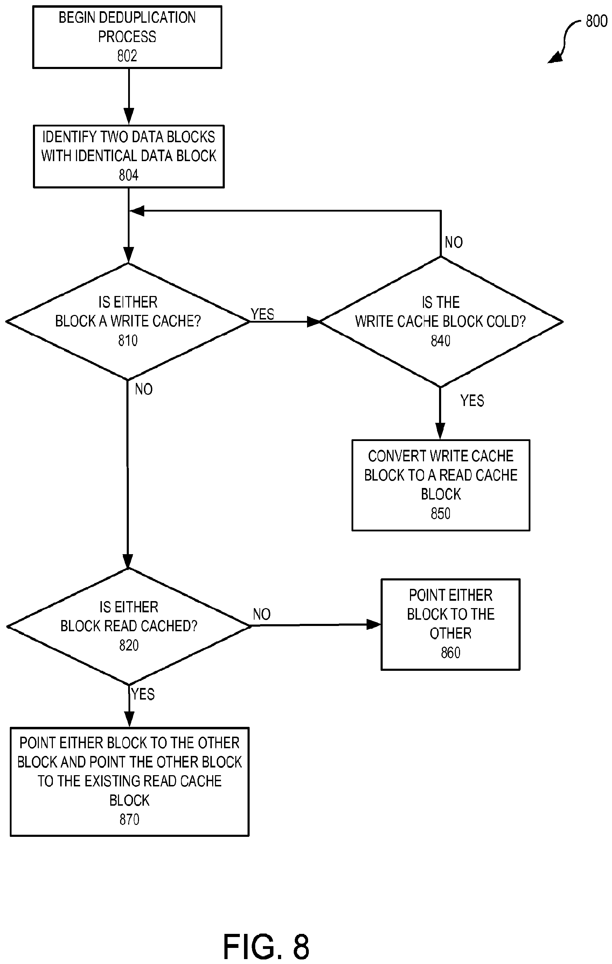

FIG. 8 illustrates method 800 of deduplicating a hybrid storage aggregate. As discussed previously, the deduplication process which starts at step 802 may be performed in post-processing or may be performed incrementally as new data blocks are received and stored. At step 804, storage manager 224 identifies two data blocks which contain identical data within the hybrid storage aggregate. At step 810, a determination is made as to whether either of the blocks is a write cache block. If either of the blocks is a write cache block, a next determination is made at step 840 to determine if the write cache block is cold or is becoming cold (i.e., infrequently accessed). To determine whether a block is cold, an access frequency threshold can be applied, where the block would be considered cold if its own access frequency falls below that threshold. The specific threshold used in this regard is implementation-specific and is not germane to this description. If the write cache block is not cold, no action is taken with respect to the two identified blocks. If the block is determined to be cold, the write cache block is converted to a read cache block at step 850 in a manner similar to that discussed with respect to FIG. 7B.

Returning to step 810, if neither block is a write cache block, a next determination is made at step 820 to identify whether either block is read cached. If neither block is read cached, the two blocks are deduplicated at step 860. This is accomplished by modifying the metadata for a first one of the blocks to point to the other block and the first block is otherwise deleted or released. Step 860 is performed in a manner similar to that discussed with respect to FIG. 5B. If both of the blocks are read cached a selection may be made as to which of the blocks to retain and which to deduplicate. In some cases, the decision may be based on which has a higher reference count. A reference count includes information related to how many different files make use of the block. For example, a data block which is only used by one file may have a reference count of one. A data block which is used by several files, possibly as a result of previous deduplication processes, will typically have a value greater than one. The block with the higher reference count may be retained while the block with fewer references is freed or released. The reference account associated with the freed or released block may be added to or combined with the reference count of the retained block to properly reflect a new reference count of the retained block.

Returning to step 820, if one of the blocks is read cached, the two blocks are deduplicated by modifying the metadata of one block to point to the other block at step 870. Metadata associated with the other block is also modified to point to the existing read cache block (i.e., a third data block in the SSD array which contains identical data to the two identified blocks). Step 870 is performed in a manner similar to that discussed with respect to FIG. 6B.

Embodiments of the present invention include various steps and operations, which have been described above. A variety of these steps and operations may be performed by hardware components or may be embodied in machine-executable instructions, which may be used to cause one or more general-purpose or special-purpose processors programmed with the instructions to perform the steps. Alternatively, the steps may be performed by a combination of hardware, software, and/or firmware.

Embodiments of the techniques introduced here may be provided as a computer program product, which may include a machine-readable medium having stored thereon non-transitory instructions which may be used to program a computer or other electronic device to perform some or all of the operations described herein. The machine-readable medium may include, but is not limited to optical disks, compact disc read-only memories (CD-ROMs), magneto-optical disks, floppy disks, ROMs, random access memories (RAMs), erasable programmable read-only memories (EPROMs), electrically erasable programmable read-only memories (EEPROMs), magnetic or optical cards, flash memory, or other type of machine-readable medium suitable for storing electronic instructions. Moreover, embodiments of the present invention may also be downloaded as a computer program product, wherein the program may be transferred from a remote computer to a requesting computer by way of data signals embodied in a carrier wave or other propagation medium via a communication link.

The phrases "in some embodiments," "according to some embodiments," "in the embodiments shown," "in other embodiments," "in some examples," and the like generally mean the particular feature, structure, or characteristic following the phrase is included in at least one embodiment of the present invention, and may be included in more than one embodiment of the present invention. In addition, such phrases do not necessarily refer to the same embodiments or different embodiments.

While detailed descriptions of one or more embodiments of the invention have been given above, various alternatives, modifications, and equivalents will be apparent to those skilled in the art. For example, while the embodiments described above refer to particular features, the scope of this invention also includes embodiments having different combinations of features and embodiments that do not include all of the described features. Accordingly, the scope of the present invention is intended to embrace all such alternatives, modifications, and variations as fall within the scope of the claims, together with all equivalents thereof. Therefore, the above description should not be taken as limiting the scope of the invention, which is defined by the claims.

## Claims

1. A method comprising:
operating (410) a hybrid storage aggregate (280) that includes a plurality of tiers of different types of physical storage media, wherein a first tier (260) of storage of the plurality of tiers includes persistent storage media having a lower latency than persistent storage media of a second tier (250) of storage of the plurality of tiers;
operating the first tier of storage as a cache for the second tier of storage;
identifying (420) a first storage block and a second storage block of the hybrid storage aggregate that contain identical data, wherein the first storage block and the second storage block are each located in the first or second tier of the storage aggregate, at least one of the first or second blocks is stored in the second tier and the other one of the first or second blocks is stored in the first tier;
identifying (430) caching statuses in said cache of the first storage block and the second storage block; and
deduplicating (440) the first storage block and the second storage block based on the caching statuses of the first storage block and the second storage block.

2. The method of claim 1 wherein the persistent storage media of the first tier of storage includes a solid state storage device and the persistent storage media of the second tier of storage includes a disk based storage device.

3. The method of claim 1 wherein:
the first and a third storage blocks are located in the second tier of storage, and the first storage block and the third storage block contain identical data;
metadata associated with the first storage block points to the second storage block; and
deduplicating includes changing metadata associated with the third storage block to point to the first storage block.

4. The method of claim 3 further comprising:
receiving a request to read the third storage block; and
transmitting the data of the second storage block in response to the request.

5. The method of claim 1 wherein:
the first and a third storage block are located in the second tier of storage, and the first storage block and the third storage block contain identical data;
metadata associated with the first storage block points to the second storage block; and
deduplicating includes changing metadata associated with the third storage block to point to the second storage block and changing metadata associated with the first storage block to point to the third storage block.

6. The method of claim 5 further comprising:
receiving a request to read the first storage block; and
transmitting the data of the second storage block in response to the request.

7. The method of claim 1 wherein:
the first storage block is located in the first tier of storage and has an access frequency below a threshold;
the second storage block is located in the second tier of storage; and
deduplicating includes changing metadata of the second storage block to point to the first storage block to make the first storage block a read cache for the second storage block and changing metadata associated with the first storage block to point to the second storage block.

8. The method of claim 1 wherein:
a third storage block and the second storage block are located in the first tier of storage;
the third storage block contains data identical to the data of the second storage block;
a first reference count indicates a number of files which use the third storage block and a second reference count indicates a number of files which use the second storage block, wherein the first reference count is greater than the second reference count; and
deduplicating includes:
changing metadata of the second storage block to point to the third storage block; and
adding an access frequency of the second storage block to an access frequency of the third storage block.

9. A non-transitory machine-readable medium comprising non-transitory instructions that, when executed by one or more processors, direct the one or more processors to perform the method of any preceding claim.

10. A storage server system (200) comprising:
a processor (240); and
a memory (220) coupled with the processor and including a storage manager (224) that directs the processor to:
operate a hybrid storage aggregate (280) including a first tier (260) of storage and a second tier (250) of storage, wherein the first tier of storage includes persistent storage media which has a lower latency than persistent storage media of the second tier of storage;
operate the first tier of storage as a cache for the second tier of storage;
identify a first storage block and a second storage block in the hybrid storage aggregate that contain duplicate data, wherein the first storage block and the second storage block are each located in the first or second tier of the storage aggregate, and at least one of the first or second blocks is stored in the second tier and the other one of the first or second blocks is stored in the first tier;
identify caching statuses in said cache of the first storage block and the second storage block; and
deduplicate the first and the second storage bocks based on the caching relationships.

11. The storage server system of claim 1 0 wherein persistent storage media of the first tier of storage includes a solid state device and persistent storage media of the second tier of storage includes a hard disk device.

## Patentansprüche

1. Verfahren umfassend:
Betrieb (410) eines Hybridspeicheraggregats (280), das eine Mehrheit von Schichten von veschiedenen Typen von physischen Speicherdatenträgern einbezieht, wobei eine erste Speicherschicht (260) der Mehrheit von Schichten dauerhafte Speicherdatenträger einbezieht, die eine niedrigere Latenz aufweisen als dauerhafte Speicherdatenträger einer zweiten Speicherschicht (250) der Mehrheit von Schichten;
Betrieb der ersten Speicherschicht als einen Cache für die zweite Speicherschicht;
Identifizierung (420) von einem ersten Speicherblock und einem zweiten Speicherblock des Hybridspeicheraggregats, die identische Daten enthalten, wobei der erste Speicherblock und der zweite Speicherblock in der ersten oder zweiten Schicht des Speicheraggregats angeordnet sind, wobei wenigstens einer der ersten oder zweiten Blöcke in der zweiten Schicht gelagert ist und der andere der ersten oder zweiten Blöcke in der ersten Schicht gelagert ist;
Identifizierung (430) von Cachezuständen im Cache des ersten Speicherblocks und des zweiten Speicherblocks; und
Deduplizierung (440) des ersten Speicherblocks und des zweiten Speicherblocks auf der Grundlage der Cachezuständen des ersten Speicherblocks und des zweiten Speicherblocks.

2. Verfahren nach Anspruch 1 wobei die dauerhaften Speicherdatenträger der ersten Speicherschicht eine Festspeichervorrichtung einbeziehen und die dauerhaften Speicherdatenträger der zweiten Speicherschicht eine festplattebasierte Speicervorrichtung einbeziehen.

3. Verfahren nach Anspruch 1 wobei:
der erste und ein dritter Speicherblock in der zweiten Speicherschicht angeordnet sind, und der erste Speicherblock und der dritte Speicherblock identische Daten enthalten;
mit dem ersten Speicherblock verbundene Metadaten auf den zweiten Speicherblock zeigen; und
Deduplizieren eine Änderung von mit dem dritten Speicherblock verbundenen Metadaten einbezieht, so dass die Metadaten auf den ersten Speicherblock zeigen.

4. Verfahren nach Anspruch 3 ferner umfassend:
Aufnahme einer Anfrage den dritten Speicherblock zu lesen; und
Übertragung der Daten des zweiten Speicherblocks als Reaktion auf die Anfrage.

5. Verfahren nach Anspruch 1 wobei:
der erste und ein dritter Speicherblock in der zweiten Speicherschicht angeordnet sind, und der erste Speicherblock und der dritte Speicherblock identische Daten enthalten;
mit dem ersten Speicherblock verbundene Metadaten auf den zweiten Speicherblock zeigen; und
Deduplizieren eine Änderung von mit dem dritten Speicherblock verbundenen Metadaten einbezieht, so dass sie auf den zweiten Speicherblock zeigen, sowie eine Änderung von mit dem ersten Speicherblock verbundenen Metadaten, so dass sie auf den dritten Speicherblock zeigen.

6. Verfahren nach Anspruch 5 ferner umfassend:
Aufnahme einer Anfrage den ersten Speicherblock zu lesen; und
Übertragung der Daten des zweiten Speicherblocks als Reaktion auf die Anfrage.

7. Verfahren nach Anspruch 1 wobei:
der erste Speicherblock in der ersten Speicherschicht angeordnet ist und eine Zugriffshäufigkeit unter einer Schwellwert aufweist;
der zweite Speicherblock in der zweiten Speicherschicht angeordnet ist; und
Deduplizieren eine Änderung von Metadaten des zweiten Speicherblocks einbezieht, um auf den ersten Speicherblock zu zeigen, um den ersten Speicherblock als einen Lese-Cache für den zweiten Speicherblock funktionieren zu lassen, sowie eine Änderung von mit dem ersten Speicherblock verbundenen Metadaten, so dass sie auf den zweiten Speicherblock zeigen.

8. Verfahren nach Anspruch 1 wobei:
ein dritter Speicherblock und der zweite Speicherblock in der ersten Speicherschicht angeordnet sind;
der dritte Speicherblock Daten enthält, die identisch sind mit den Daten des zweiten Speicherblocks;
eine erste Bezugszahl eine Anzahl von Dateien angibt, die den dritten Speicherblock benutzen, und eine zweite Bezugszahl eine Anzahl von Dateien angibt, die den zweiten Speicherblock benutzen, wobei die erste Bezugszahl höher als die zweite Bezugszahl ist; und
Deduplizieren einbezieht:
eine Änderung von Metadaten des zweiten Speicherblocks, um auf den dritten Speicherblock zu zeigen; und
Hinzufügung einer Zugriffshäufigkeit des zweiten Speicherblocks zu einer Zugriffshäufigkeit des dritten Speicherblocks.

9. Ein nichtflüchtiges, maschinenlesbares Medium umfassend nichtflüchtige Anweisungen, die, wenn durch einen oder mehr Prozessoren ausgeführt, den einen oder mehr Prozessoren dazu anweisen, das Verfahren nach einem jeglichen der vorherstehenden Ansprüche auszuführen.

10. Speicherserversystem (200) umfassend:
einen Prozessor (240); und
einen Speicher (220), der mit dem Prozessor gekoppelt ist und eine Speicherverwaltung einbezieht (224), die den Prozessor dazu anweist:
ein Hybridspeicheraggregat (280) zu betreiben, das eine erste Speicherschicht (260) und eine zweite Speicherschicht (250) einbezieht, wobei die erste Speicherschicht dauerhafte Speicherdatenträger einbezieht, die eine niedrigere Latenz als dauerhafte Speicherdatenträger der zweiten Speicherschicht aufweisen;
die erste Speicherschicht als einen Cache für die zweite Speicherschicht zu betreiben;
einen ersten Speicherblock und einen zweiten Speicherblock im Hybridspeicheraggregat zu identifizieren, die Doppeldaten enthalten, wobei der erste Speicherblock und der zweite Speicherblock jeweils in der ersten oder zweiten Schicht des Speicheraggregats angeordnet sind, und wobei wenigstens einer der ersten oder zweiten Blöcke in der zweiten Schicht gelagert ist, und der andere der ersten oder zweiten Blöcke in der ersten Schicht gelagert ist;
Cachezustände im Cache des ersten Speicherblocks und des zweiten Speicherblocks zu identifizieren; und
den ersten und den zweiten Speicherblock auf der Grundlage der Cacheverhältnisse zu deduplizieren.

11. Speicherserversystem nach Anspruch 10 wobei dauerhafte Speicherdatenträger der ersten Speicherschicht eine Festkörpervorrichtung einbezieht und dauerhafte Speicherdatenträger der zweiten Speicherschicht eine Festplattevorrichtung einbezieht.

## Revendications

1. Procédé comprenant:
l'exploitation (410) d'un ensemble de dispositifs stockage hybride (280) qui comporte une pluralité de niveaux de différents types de supports de stockage physiques, où un premier niveau (260) de stockage de la pluralité des niveaux comporte des supports de stockage persistants ayant une latence plus faible que des supports de stockage persistants d'un deuxième niveau (250) de stockage de la pluralité de niveaux;
l'exploitation du premier niveau de stockage comme une cache pour le deuxième niveau de stockage;
l'identification (420) d'un premier bloc de stockage et d'un deuxième bloc de stockage de l'ensemble de dispositifs de stockage hybride qui contiennent des données identiques, où le premier bloc de stockage et le deuxième bloc de stockage sont placés chacun dans le premier niveau ou le deuxième niveau du dispositif de stockage, dont au moins un des premier ou deuxième blocs étant stocké dans le deuxième niveau et un autre des premier ou deuxième blocs étant stocké dans le premier niveau;
l'identification (420) des états de cache dans ladite cache du premier bloc de stockage et du deuxième bloc de stockage; et
la déduplication (440) du premier bloc de stockage et du deuxième bloc de stockage basée sur les états du premier block de stockage et du deuxième bloc de stockage.

2. Procédé selon la revendication 1, où le support de stockage persistant du premier niveau de stockage comporte un dispositif de stockage à l'état solide, et le support de stockage persistant du deuxième niveau de stockage comporte un dispositif de stockage basé sur disque.

3. Procédé selon la revendication 1, où:
le premier bloc de stockage et un troisième bloc de stockage sont placés dans le deuxième niveau du stockage, et le premier bloc de stockage et le troisième bloc de stockage contiennent des données identiques;
des métadonnées associées avec les premiers points de bloc de stockage au deuxième bloc de stockage; et
la déduplication comporte le changement de métadonnées associées avec le troisième bloc de stockage pour pointer au premier bloc de stockage.

4. Procédé selon la revendication 3, comprenant en outre:
la réception d'une demande de lire le troisième bloc de stockage; et
la transmission des données du deuxième bloc de stockage en réponse à la demande.

5. Procédé selon la revendication 1, où:
le premier et un troisième bloc de stockage sont placés dans le deuxième niveau de stockage, et le premier bloc de stockage et le troisième bloc de stockage contiennent des données identiques;
des métadonnées associées avec le premier bloc de stockage pointent au deuxième bloc de stockage; et
la déduplication comporte le changement de métadonnées associé avec le troisième bloc de stockage pour pointer au deuxième bloc de stockage et le changement des métadonnées associées avec le premier bloc de stockage pour pointer au troisième bloc de stockage.

6. Procédé selon la revendication 5, comprenant en outre:
la réception d'une demande de lire le premier bloc de stockage, et la transmission de données du deuxième bloc de stockage en réponse à la demande.

7. Procédé selon la revendication 1, où:
le premier bloc de stockage est placé dans le premier niveau de stockage et a une fréquence d'accès en dessous d'un seuil;
le deuxième bloc de stockage est placé dans le deuxième niveau de stockage; et
la déduplication comporte le changement de métadonnées du deuxième bloc de stockage pour pointer au premier bloc de stockage afin de faire du premier bloc de stockage une cache de lecture pour le deuxième bloc de stockage, et le changement de métadonnées associées avec le premier bloc de stockage pour pointer au deuxième bloc de stockage.

8. Procédé selon la revendication 1, où:
un troisième bloc de stockage et le deuxième bloc de stockage sont placés dans le premier niveau de stockage;
le troisième bloc de stockage contient des données identiques aux données du deuxième bloc de stockage;
une première valeur de référence indique une quantité de fichiers qui utilisent le troisième bloc de stockage et
une deuxième valeur de référence indique une quantité de fichiers qui utilisent le deuxième bloc de stockage, où la première valeur de référence est supérieure à la deuxième valeur de référence, et
la déduplication comporte:
le changement de métadonnées du deuxième bloc de stockage pour pointer au troisième bloc de stockage; et
l'addition d'une fréquence d'accès du deuxième bloc de stockage à une fréquence d'accès au troisième bloc de stockage.

9. Support informatique non transitoire comprenant des instructions non transitoire qui, lorsque exécutées par un ou plusieurs processeurs, dirigent l'un ou plusieurs processeurs à réaliser le procédé de l'une quelconque des revendications précédentes.

10. Système de serveur de stockage (200) comprenant:
un processeur (240); et
une mémoire (220) couplée avec le processeur et incluant un gestionnaire de stockage (224) qui dirige le processeur à:
exploiter un ensemble de dispositifs de stockage hybride (280) incluant un premier niveau (260) de stockage et un deuxième niveau (250) de stockage, où le premier niveau de stockage inclut des supports de stockage persistants ayant une latence plus faible que des supports de stockage d'un deuxième niveau de stockage;
exploiter le premier niveau de stockage comme une cache pour le deuxième niveau de stockage;
identifier un premier bloc de stockage et un deuxième bloc de stockage dans l'ensemble de dispositifs de stockage hybride qui contient des données de duplication, où le premier bloc de stockage et le deuxième bloc de stockage sont placés chacun dans le premier ou le deuxième niveau du dispositif de stockage, et au moins un des premier ou deuxième blocs est stocké dans le deuxième niveau, et un autre des premier ou deuxième blocs est stocké dans le premier niveau;
identifier des états de cache dans ladite cache dudit premier bloc de stockage et le deuxième bloc de stockage; et
dédupliquer les premier et deuxième blocs de stockage sur les rapports de cache.

11. Système de serveur de stockage de la revendication 10, où des supports de stockage persistants du premier niveau de stockage comportent un dispositif d'état solide, et où des supports de stockage persistants du deuxième niveau de stockage comportent un dispositif de disque dur.
